(19) Europäisches Patentamt
European Patent Office
Office européen des brevets

(11) **EP 0 677 841 B1**

(12) **EUROPEAN PATENT SPECIFICATION**

(45) Date of publication and mention
of the grant of the patent:
**20.06.2001 Bulletin 2001/25**

(51) Int Cl.[7]: **G11B 15/18**, G11B 15/467,
G11B 15/087, G11B 15/12

(21) Application number: **94302617.9**

(22) Date of filing: **13.04.1994**

(54) **Magnetic recording and reproducing apparatus**

Magnetisches Aufzeichnungs- und Wiedergabegerät

Appareil d'enregistrement et de reproduction magnétique

(84) Designated Contracting States:
**DE FR GB**

(43) Date of publication of application:
**18.10.1995 Bulletin 1995/42**

(73) Proprietor: **MATSUSHITA ELECTRIC INDUSTRIAL CO., LTD.**
**Kadoma-shi, Osaka-fu 571 (JP)**

(72) Inventors:
- **Honjo, Kenichi**
  **Kobe-shi, Kyogo-ken 654 (JP)**
- **Maruoka, Toshihiko**
  **Ikeda-shi, Osaka-fu 563 (JP)**
- **Isaka, Haruo**
  **Yawata-shi, Kyoto-fu 614 (JP)**
- **Gotou, Makoto**
  **Nishinomya-shi, Hyogo-ken 663 (JP)**
- **Ichikawa, Kei**
  **Osaka-shi, Osaka-fu 532 (JP)**
- **Hashimoto, Kiyokazu**
  **Matsubara-shi, Osaka-fu 580 (JP)**
- **Shimotashiro, Masafumi**
  **Katano-shi, Osaka-fu 576 (JP)**

(74) Representative: **Crawford, Andrew Birkby et al**
**A.A. Thornton & Co.**
**235 High Holborn**
**London WC1V 7LE (GB)**

(56) References cited:
| | |
|---|---|
| **EP-A- 0 137 346** | **EP-A- 0 208 536** |
| **EP-A- 0 508 779** | **EP-A- 0 564 234** |
| **DE-A- 3 808 198** | **US-A- 4 663 673** |
| **US-A- 4 760 474** | **US-A- 5 010 424** |

- **PATENT ABSTRACTS OF JAPAN vol. 17, no. 70 (P-1485) 12 February 1993 & JP-A-04 276 345 (MATSUSHITA ELECTRIC IND CO) 1 October 1992**

## EP 0 677 841 B1

**Description**

BACKGROUND OF THE INVENTION

1. Field of the Invention

The present invention relates to a magnetic recording and reproducing apparatus for recording and reproducing picture, sound, data, and others in a magnetic tape, and more particularly to tracking control of such magnetic recording and reproducing apparatus.

2. Description of the Prior Art

Magnetic recording and reproducing apparatuses using magnetic tape as medium such as video cassette recorders are developed and spread widely. Manufacturers are promoting development for downsizing and digitizing the apparatus by further higher density recording. To raise the recording density, while maintaining the compatibility, accurate tracking of head and track is essential. As the technique for realizing accurate tracking, the tracking control method of automatic track finding (ATF) to replace the conventional tracking control method by control signal using fixed head is known. In the ATF control method, a pilot signal is multiplexed in frequency or modulated and recorded In information signal, or is recorded in burst in a different region from the information signal, and tracking is controlled by comparing the level of the pilot signal leaking in from the both adjacent tracks of the track to be scanned by the head when reproducing. This method is disclosed, for example, in the USP 5,126,892 and USP 5.182,681.
Incidentally, the magnetic recording and reproducing apparatus is required to possess a function of changing over the recording time per a reel of magnetic tape depending on the applications of the users, such as standard playing (SP) mode and long playing (LP) mode. Tracking control at high precision in any mode, and easy and automatic judgement of recording mode when reproducing are important elements for development of ATF control method.
First of all, to realize tracking control at high precision in any mode, it is essential to detect a tracking error sensitively and linearly regardless of the mode. Above all, it is important to optimize the frequency of pilot signal. By lowering the frequency of pilot signal, the apparent head width increases due to the reproduction fringe effect of inducing magnetic flux in a wider range than the head width occurring In the head, and the detection sensitivity is lowered. On the other hand, by raising the frequency of pilot signal, linearity of detection is worsened by azimuth loss. It is hence necessary to set the frequency of pilot signal by considering them all.
However, when the frequency of pilot signal is optimized in the SP mode. in the LP mode of narrow track width, not only the detection sensitivity is lowered due to the same reproduction fringe as in SP mode, but also dead zone is likely to be formed in detection. To the contrary, when similarly optimized in LP mode, the range for keeping linearity is narrow, and the frequency of pilot signal is higher than the optimum value in SP mode, and linearity of detection is worsened in SP mode. Therefore, in the conventional method of using pilot signal of same frequency regardless of the mode, it was difficult to realize tracking control of high precision in any mode.
On the other hand, for easy and automatic judgement of recording mode, the following methods have been hitherto known. When reproduced in a mode different from a recording mode:

- Method of judging by the period of reproduced pilot signal
- Method of judging by the period of tracking error signal
- Method of judging by the fluctuation level of tracking error signal

These methods are disclosed, for example, in the USP 4,811,129.
However, in the method of Judging the recording mode by the period of reproduced pilot signal or tracking error signal, it is necessary to reproduce a plurality of tracks and detect a stable period, and the judging circuit is complicated, and judgement is difficult, and the tape speed cannot be changed over immediately. In the method of Judging the recording mode by the fluctuation level of tracking error signal, it is difficult to set the threshold in relation to the fluctuation of tracking error in normal play mode.
In ATF control, pilot signals of several different frequencies are cyclically changed over, and recorded by multiplexing in frequency on the information to be recorded, or modulating. When reproducing, the pilot signals leaking from both tracks adjacent to the reproduced track are reproduced as reproduced signals together with the desired reproduced signal. The amplitude of the pilot signals from both adjacent tracks contained in the reproduced signals is detected by a pilot detector. The difference is determined by the differential circuit by using the amplitude of the two types of pilot signals being detected. Depending on the deviation of the target track and the head, the amplitude of each pilot signal varies differentially, and the output of the differential circuit becomes a tracking error signal, changing positively or negatively depending on the tracking error. Hereinafter, the tracking error detecting means refers to the device for detecting a pilot signal from reproduced signals and issuing a tracking error signal. Thus obtained tracking error signal controls the capstan motor which is responsible for tape feeding through a servo circuit, so that. the configuration of the head and the target track can be always kept correctly.

In the conventional tracking error detecting means used In magnetic recording and reproducing apparatus, the pilot detector is composed of reference signal generator, multiplexer, band pass filter and rectifier, and the reproduced signal is converted to low frequency range by the reference signal generator, multiplexer and band pass filter, and the pilot signal component is extracted by the band pass filter, and its amplitude is detected in the rectifier. The difference of the amplitude of two detected pilot signals is calculated in the differential amplifier, and a tracking error signal is issued. (For example, the USP 5,126,892)

In such conventional tracking error detecting means, however, the band pass filter and rectifier are composed of analog circuits basically constituted with coils, capacitors and resistances, and in the band pass filter, in particular, capacitors of large capacitance, resistances and coils are required, and the IC design was difficult. Moreover, the capacitors, resistances and coils composing the band pass filter tend to vary in the characteristics of elements depending on the environments of use or condition of fabrication. Accordingly, the center frequency detected from the frequency of pilot signal is deviated, or the gain fluctuates, thereby causing to worsen the detection characteristic. To solve these problems, an adjusting circuit is required" which required an additional cost.

SUMMARY OF THE INVENTION

It is hence an object of the invention to present tracking error detecting means for magnetic recording and reproducing apparatus which is resistant to fluctuation of elements composing the circuits, is capable of detecting the pilot signal correctly without any adjustment, and is easy to be designed in an IC.

To achieve the object, the invention presents a tracking error detector used in a magnetic recording and reproducing apparatus for reproducing tracks formed obliquely to a longitudinal direction of a magnetic tape in which pilot signals have been recorded in multiplex with an information signal by a rotary head, and forming a tracking error signal for correcting deviation of a scanning track of the rotary head relative to a target track to be scanned by the rotary head by a level difference of pilot signals reproduced from both adjacent tracks adjacent to the target track, said tracking error detector comprising:

Sampling means for analog-digital converting a reproduced signal at a predetermined sampling frequency; amplitude detecting means for detecting an amplitude of a first pilot signal from one of adjacent tracks from an output signal of the sampling means and an amplitude of a second pilot signal from the other of the adjacent tracks; and

subtracting means for determining a difference between the amplitudes of the first and second pilot signals and for issuing the tracking error signal,

characterized in that the predetermined sampling frequency of the sampling means is substantially equal to a common multiple of each pilot frequency leaking in from the both adjacent tracks.

In this constitution, since the error signal is determined on the basis of the analog-digital converted value at the sampling frequency of common multiple of each pilot signal, it is free from effects of fluctuations of elements such as capacitors, coils and resistances, and the tracking error detecting means simple in constitution and easy in IC design can be presented.

BRIEF DESCRIPTION OF THE DRAWINGS

Fig. 1 is a structural diagram of a first magnetic recording and reproducing apparatus in which the present invention may be used.

Fig. 2 is a structural diagram of a pilot frequency judging circuit in the first, second and third magnetic recording and reproducing apparatuses to which the present invention may be applied.

Fig. 3 is a diagram showing the detection principle of relative position of a reproducing head relative to tracks in SP mode in the first, second and third magnetic recording and reproducing apparatuses.

Fig. 4 is a graph showing the relation of track offset amount of head and level of reproduced pilot signal in SP mode in the first, second and third magnetic recording and reproducing apparatuses.

Fig. 5 is a diagram showing the detection principle of relative position of a reproducing head relative to tracks in LP mode in the first, second and third magnetic recording and reproducing apparatuses.

Fig. 6 is a graph showing the relation of track offset amount of head and level of reproduced pilot signal in LP mode In the first, second and third magnetic recording and reproducing apparatuses.

Fig. 7 is a structural diagram of a second magnetic recording and reproducing apparatus in which the present invention may be used.

Fig. 8 is a structural diagram of a third magnetic recording and reproducing apparatus in which the present invention may be used.

Fig. 9 is a block diagram of a first embodiment of a tracking error detector according to the present invention.

Fig. 10 is a block diagram in which an amplitude detector is an envelope detection in the first embodiment of the tracking error detector of the present invention.

Fig. 11 is an example of a band pass filter in the first embodiment of the tracking error detector of the present invention.

Fig. 12 is a block diagram in which the amplitude detector is an orthogonal two-phase signal multiple detection in the first embodiment of the tracking error detector of the present invention.

Fig. 13 is a structural diagram of a sinusoidal generator in the first embodiment of the tracking error detector of the present invention .

Fig. 14 is a block diagram of a sinusoidal multiplexer in the first embodiment of the tracking error detector of the present invention.

Fig. 15 is a block diagram of a tracking error detector in a second embodiment of a tracking error detector of the present invention.

Fig. 16 is a time chart of the tracking error detector in the second embodiment of the tracking error detector of the present invention.

Fig. 17 is a block diagram of a time-sharing amplitude detector in the second embodiment of the tracking error detector of the present invention.

Fig. 18 is a block diagram of a time-sharing low pass filter in the second embodiment of the tracking error detector of the present invention.

Fig. 19 is a time chart of a tracking error detector of orthogonal two-phase signal multiple detection in the second embodiment of the tracking error detector of the invention.

Fig. 20 is a block diagram of a time-sharing sinusoidal signal multiplexer in the second embodiment of the tracking error detector of the invention

DESCRIPTION OF THE PREFERRED EMBODIMENTS

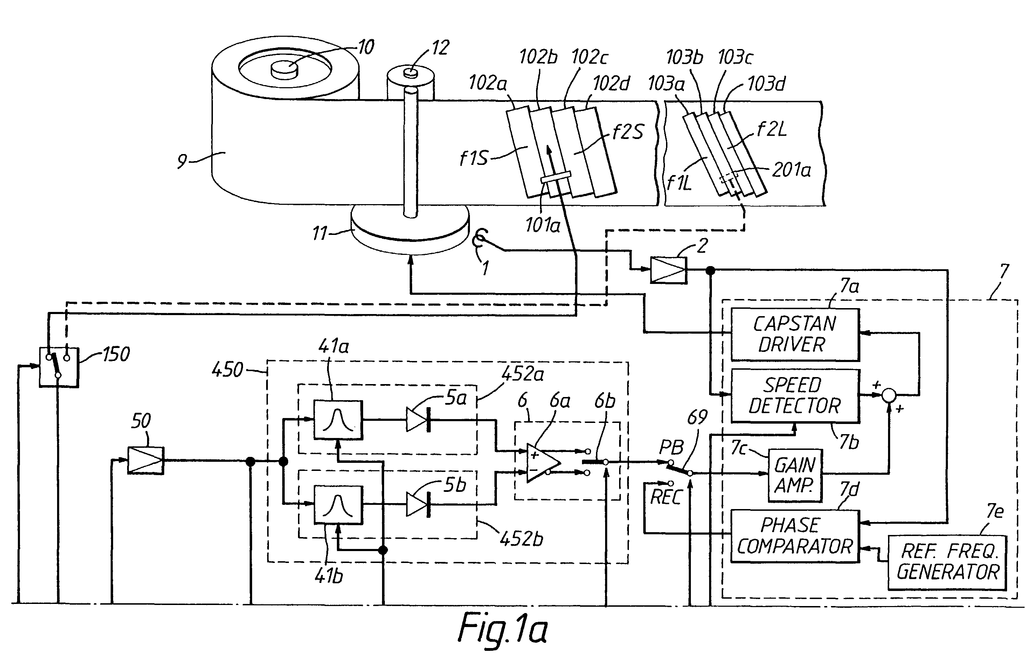

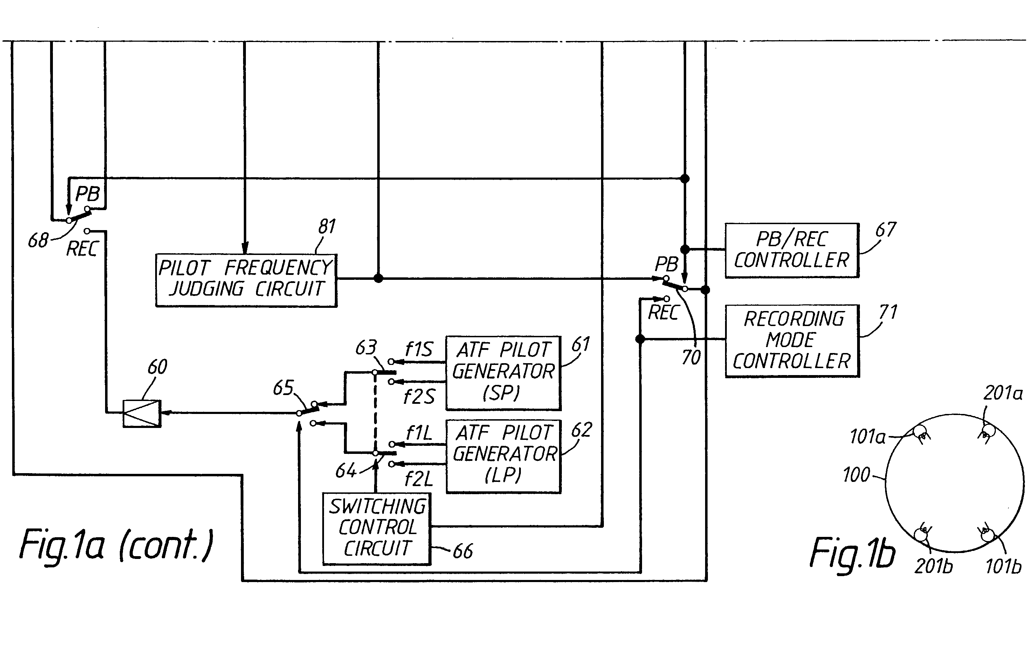

A first magnetic recording and reproducing apparatus which may be used with the present invention is described with reference to drawings. Fig. 1 is a structural diagram of a magnetic recording and reproducing apparatus The constituent elements functioning alike are identified with same reference numerals in the subsequent second and third examples of magnetic recording and reproducing apparatus. In Fig. 1, a reel 10 winds up a magnetic tape 9 with a proper tension. A capstan 11 drives the magnetic tape 9 at a proper speed by means of a servo circuit 7. A pinch roller 12 presses the tape 9 to the capstan 11. A head 1 detects a frequency generation (FG) signal magnetized on the capstan 11, and an amplifier 2 amplifies the FG signal. Heads 101a, 101b are wide heads for SP mode mutually different in the azimuth angle, being mounted on a rotary drum 100 confronting each other at 180 degrees, and are used as being sequentially changed over by a head switch. Heads 201a, 201b are narrow heads for LP mode mutually different in the azimuth angle, being mounted on the rotary drum 100 confronting each other at 180 degrees, and are used as being sequentially changed over by the head switch. A servo circuit 7 is mainly composed of a capstan driving circuit 7a, a speed detector 7b, and a phase comparator 7d, and a reference frequency generator 7e and a gain amplifier 7c are connected to the phase comparator 7d.

First, the operating principle in recording is described. Switches 68, 69, 70 are changed to the recording side by a play/record controller 67. A record mode controller 71 selects the SP mode or LP mode, and changes over the head for SP or LP mode by a head switch 150. An ATF pilot generator 61 issues pilot signals $f_{1s}$, $f_{2s}$ in SP mode, and an ATF pilot generator 62 issues pilot signal $f_{1L}$, $f_{2L}$ in LP mode, and their frequencies are different. In SP mode, the magnetic tape 9 is fed at a speed corresponding to the SP mode by the servo circuit 7. A switching control circuit 66 issues ternary pulses synchronized with the period of the head switch, and changes over switches 63, 64 sequentially to upper side ON, OPEN and lower side ON, so that the pilot signal $f_{1s}/f_{2s}$ amplified by a recording (REC) amplifier 60 may be alternately recorded in every other track on the magnetic tape 9 by the head 101b as shown in 102a, c in the diagram. Thereafter, similar patterns 102a to d are repeatedly recorded. Similarly, in LP mode, the magnetic tape 9 is sent at a speed depending on the LP mode by the servo circuit 7, and as shown in 103a, c in the diagram, the pilot signal $f_{1L}/F_{2L}$ is alternately recorded in every other track on the magnetic tape 9 by the head 201b. Thereafter, similar patterns 103a to d are repeatedly recorded.

Next is explained the operating principle in reproduction. The switches 68, 69, 70 are changed over to the play side by the play/record controller 67. It is supposed in this example that judgement of record mode mentioned below has been already completed, with the magnetic tape driven at a speed corresponding to SP mode by the servo circuit 7, and that the head 101a is scanning the track 102b.

In the head 101a, aside from the information signal of the track 102b, pilot signals $f_{1s}$, $f_{2s}$ leak in from the both adjacent tracks 102a, 102c. After the reproduced signals are amplified by an reproducing amplifier 50, mutual pilot signal levels are compared by an ATF error detector 450, and a tracking error signal is issued. In order that this tracking error signal may be balanced, the servo circuit 7 drives the capstan 11, and controls the phase of the feed of magnetic tape.

The ATF error detector 450 is composed of a first pilot detector 452a, second pilot detector 452b, and a subtracting circuit 6. The first pilot detector is composed of a first band pass filter 41a, and a first rectifier 5a, and the second pilot detector is composed of a second band pass filter 41b and a second rectifier 5b. The first band pass filter 41a and first rectifier 5a extract, and rectify the pilot signal $f_{1s}$. Likewise, the second band pass filter 41b and second rectifier 5b extract and rectify the pilot signal $f_{2s}$. The subtracting circuit 6 determines the output difference of the first and second pilot detectors, that is, the tracking error signal. The head to scan the tracks 102b, 102d is 101a, and the head to scan the tracks 102a, 102c is 101b. Accordingly, by the track reproduced by the head 101a, the output change of the subtracting circuit 6 and the track deviation direction change in polarity. The subtracting circuit 6 is composed of a subtracting circuit 6a and a switch 6b. The switch 6b receives ternary pulses synchronized with the period of the head switch from the switching controller 66, and is sequentially changed over to upper side ON, open, and lower side ON, thereby manipulating the polarity of the tracking error signal to be used actually depending on the track.

So far is explained the case in which the track recorded in SP mode is reproduced in SP mode, and when the track recorded in LP mode is reproduced in LP mode, the operating principle of the ATF control method is same as in SP mode, supposing that the record mode judgement mentioned below has been completed and that the detected pilot signals are $f_{1L}$ and $f_{2L}$.

In the reproducing operation, the principle of mode changeover operation when reproduced in a mode different from recording mode is described below. Pilot signals of different frequencies are already recorded in SP mode and LP mode, and the recording mode can be judged by detecting the frequency of the pilot signal contained in the reproduced signal. Accordingly, a pilot frequency judging circuit 81 judges the recording mode by the frequency of the reproduced pilot signal, and changes over the feed speed of the magnetic tape by the servo circuit 7, the detection band of the ATF error detector 450, and the head by the head selector 150, depending on the mode, according to the result of judgement.

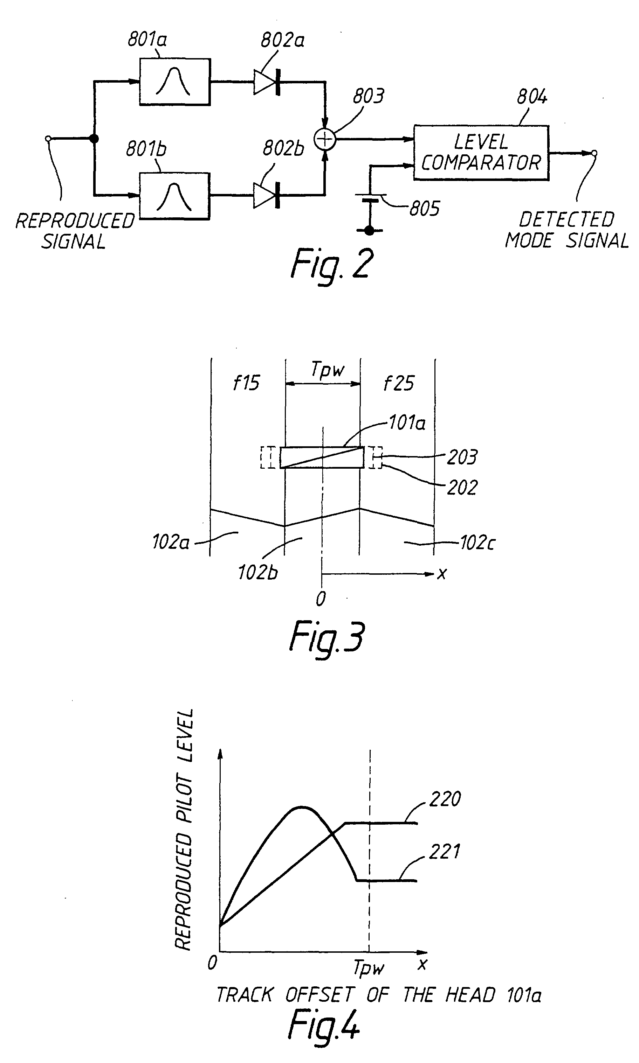

Fig. 2 is a structural diagram of the pilot frequency judging circuit 81. The center frequencies of a third band pass filter 801a and a fourth band pass filter 801b are respectively selected so as to extract the pilot signal in the same mode. This example shows the case of selecting pilot signal $f_{1L}$ and $f_{2L}$ of LP mode, and the operation of judgement of recording mode is described.

The pilot signal $f_{1L}$ is extracted and rectified by the third band pass filter 801a and third rectifier 802a, and pilot signal $f_{2L}$ is extracted and rectified by the fourth band pass filter 801b and fourth rectifier 802b. The outputs of the third and fourth rectifier are added by an adder 803, and the combined output value is compared with the threshold 805 in the level comparator 804. This threshold value 805 is set smaller than the output value of the adder 803 when the pilot signal $f_{1L}$ or $f_{2L}$ is reproduced, and set larger than the output value of the adder 803 when any other signal than the pilot signals $f_{1L}$ and $f_{2L}$ is reproduced. Therefore, in the example of the head 101a scanning the track 102b, the level detector 804 judges that the output value of the adder 803 is smaller than the threshold 805, and changes to the tape speed in reproduction to SP mode by the servo circuit 7. When reproducing a virgin tape, meanwhile, the mode is always SP.

The reproducing head goes off the track region recorded in SP mode, and gets into the track region recorded in LP mode, and when pilot signal $f_{1L}$ or $f_{2L}$ is reproduced, the output value of the adder 803 is larger than the threshold 805. The level comparator 804 judges that the reproduced track has been recorded in LP mode, and immediately the tape speed in reproduction is changed to LP mode by the servo circuit 7, and the center frequencies of the first and second band pass filters 41a, b are changed to $f_{1L}$ and $f_{2L}$, and the head is changed to LP head, respectively. To the contrary, when the reproducing head gets into the track region recorded in SP mode from the track region recorded in LP mode, similarly, the level detector 804 immediately changes the tape speed in reproduction to SP mode by the servo circuit 7, the center frequencies of the first and second band pass filters 41a, b to $f_{1s}$ and $f_{2s}$, and the head to SP head, respectively.

Thus, by recording pilot signals at different frequencies mutually in SP mode and LP mode, the conventional trouble of reproducing a plurality of tracks for judging the recording mode is eliminated. When reproduced in a mode different from recording mode, the mode can be immediately changed to the recording mode by detecting the pilot frequency. By detecting the frequency of pilot signal, the recording mode is judged, so that the complicated judging circuit used in the prior art is not necessary, and the circuit may be simplified. Moreover, by changing over the reproducing head depending on the recording mode, the quality of image signals and so on can be enhanced. Herein is explained an example of using two pilot signals for judgement of recording mode, but the same effect is obtained by using one pilot signal.

In the recording operation, by recording the pilot signal of low frequency same as in the prior art in SP mode and recording the pilot signal of high frequency about twice as high as in the prior art in LP mode, the principle of detection of reproduced pilot signal is described below.

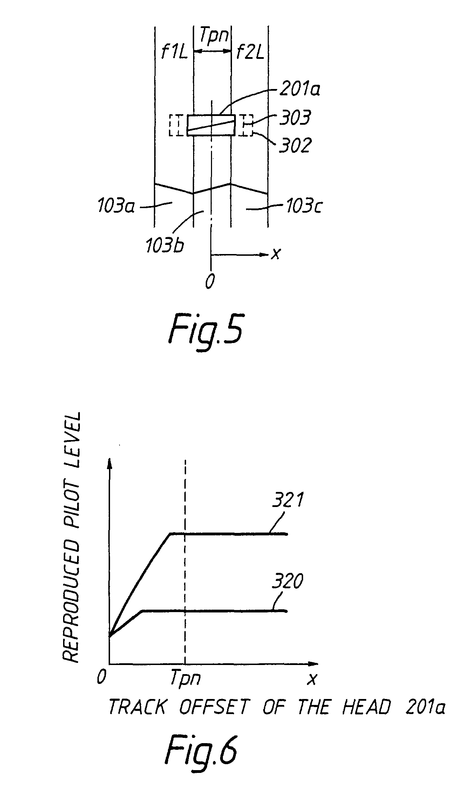

First is explained the detection of reproduced pilot signal in SP mode. Fig. 3 is a diagram showing the principle of detection of relative position of the reproducing head relative to the tracks in SP mode. Fig. 4 is a graph showing the relation between the track offset amount of the head and level of reproduced pilot signal in SP mode.

In fig. 3, the track 102a is a track in which the pilot signal at frequency $f_{1s}$ is recorded in inverse azimuth to the head 101a for SP mode only, track 102c is a track in which the pilot signal at frequency $f_{2s}$ is recorded in inverse azimuth to the head 101a, and track 102b is a main track to be reproduced and scanning by the head 101a, in which information signals are recorded in normal azimuth to the head 101a. The track width of tracks 102a to c is $T_{PW}$. Fig 3 also shows a reproduced fringe 202 of pilot frequency band of the head 101a when the frequency of pilot signal is at low frequency as in the prior art, and a reproduced fringe 203 in pilot frequency band of the head 101a when the frequency of the pilot signal is about twice as high as in the prior art.

Supposing the reproducing head 101a is off the track, the relation between this offset amount and the level of reproduced pilot signal is explained while referring to Fig. 3 and Fig. 4. In Fig 4, supposing the arrow direction of x-axis to be the positive direction, it becomes the relation between the offset amount when the head 101a is off track to the track 102c side and the level of the reproduced pilot signal $f_{2s}$, while, supposing the arrow direction of the x-axis to be the negative direction, it becomes the relation between the offset amount when the head 101a is off track to the track 102a side and the level of reproduced pilot signal $f_{1s}$.

Fig. 4 shows a graph 220 representing the relation between the track offset amount of the head 101a and the level of reproduced pilot signal when the pilot signal is at low frequency as in the prior art, and a graph 221 indicating the relation between the track offset amount of the head 101a and the level of the reproduced pilot signal when the pilot signal is about twice as high as in the prior art.

To begin with, when the pilot signal is as low as in the prior art, the reproducing range of the head 101a in the width direction, that is, the apparent head width is wider than the actual head because the reproduced fringe is as in 202. However, the fringe amount is sufficiently small as compared with the track width $T_{pw}$, and the frequency of the pilot signal is as low as to be free from effect of the azimuth loss, as shown in Fig. 4, the pilot signal is detected linearly in a wide range relative to the track width $T_{pw}$ depending on the off-track degree of the head 101a.

On the other hand, when the frequency of the pilot signal is about twice as high as in the prior art, the apparent head width of the head 101a is narrower than in the case of low frequency because the reproduced fringe is 203. As known well, when the reproducing characteristic of the head is in a low frequency region, the characteristic is 6dB/oct, and hence the reproduction level is higher than when the frequency is low. However, when the frequency of the pilot signal is high, by the azimuth characteristic, the pilot signal loses its linearity as the offset amount increases as shown by 221 in Fig. 4, and the level of the pilot signal is attenuated.

Described next is the detecting principle of reproduced pilot signal in LP mode. Fig. 5 shows the detection principle of the relative position of the head to the track in LP mode. Fig. 6 is a graph representing the relation between the track offset amount of the head and the level of reproduced pilot signal in LP mode.

In Fig. 5, the track 103a is a track in which the pilot signal at frequency $F_{1L}$ is recorded in inverse azimuth to the head 201a for LP mode only, the track 103c is a track in which the pilot signal at frequency $f_{2L}$ is recorded in inverse azimuth to the head 201a, and the track 103b is a main track to be reproduced and scanned by the head 201a, and the information signals are recorded in normal azimuth to the head 201a. Each track width of tracks 103a to c is $T_{pn}$ (1/2 of the track width $T_{pw}$ in SP mode). Fig. 5 also shows a reproduced fringe 302 in the pilot frequency band of the head 201a when the pilot signal frequency is low as in the prior art, and a reproduced fringe 303 of the pilot frequency band of the head 201a when the pilot signal frequency is about twice as high as in the prior art.

Supposing the head 201a is off track, the relation between the offset amount and the level of reproduced pilot signal is explained while referring to Fig. 5 and Fig. 6. In Fig. 6, assuming the arrow direction of the x-axis to be positive direction, it becomes the relation between the offset amount when the reproducing head 201a is off track to the track 103c side and the level of reproduced pilot signal $f_{2L}$, or if the arrow direction of the x-axis is negative direction, it becomes the relation between the offset amount when the head 201a is off track to the track 103a side and the level of the reproduced pilot signal $f_{1L}$.

Fig. 6 shows a graph 320 representing the relation between the track offset amount of the head 201a in the pilot signal at a low frequency same as in the prior art and the level of reproduced pilot signal, and a graph 321 representing the relation between the head 201a in the pilot signal at frequency about twice as high in the prior art and the level of the reproduced pilot signal.

When the frequency of the pilot signal is low as in the prior art, the reproducing range of the head 201a in the width direction, that is, the apparent head width is wider than the actual head width because the reproduced fringe is 302, and the tracks 103a, 103c adjacent to the head 201a are reproduced in a wide range. Accordingly, as shown in the graph 320 in Fig. 6, the range of linearly detecting the pilot signal is narrow. Depending on the fluctuations of the head width or the like, the reproducing range of the head in the width direction in the pilot frequency band may exceed the width of three tracks, and dead zone is formed in the tracking error signal in this case.

On the other hand, when the frequency of the pilot signal is about twice as high as in the prior art, the apparent head width of the head 201a is narrower as compared with the case of the low frequency since the reproduced fringe is 303. Besides, as known well, in the low frequency range of the reproduction characteristic of the head, the characteristic is 6 dB/oct, and the detection level is higher than in the case of low frequency. As explained above, when the frequency is high, in SP mode, the reproduced pilot signal is attenuated as the offset amount of the head increases due to the effect of azimuth characteristic, but in LP mode, since the track width is narrow, the range for keeping linearity may be narrow, Therefore, the pilot signal can be detected almost linearly in a wide range, and the detection sensitivity may be further enhanced. (Reference: Akio Murata, et al., "Optimization of azimuth angle in digital VTR," Technical Report of the Institute of Electronics, information and Communication Engineers of Japan, Vol. 90, No. 487 (MR90 63-66), 1991, pp. 17-23)

As clear from the description herein, by recording the pilot signal of low frequency as in the prior art in SP mode and recording the pilot signal of high frequency about twice the prior art in LP mode, the reproducing head can be controlled in tracking at higher precision in any mode. In the conventional method of performing ATF control when reproducing by recording the pilot signals at same frequency in two different recording modes, the linear range in the SP mode becomes narrow due to the fringe effect of the head and azimuth characteristic, and dead zone is formed in LP mode, or the sensitivity is lowered, and all these problems can be solved.

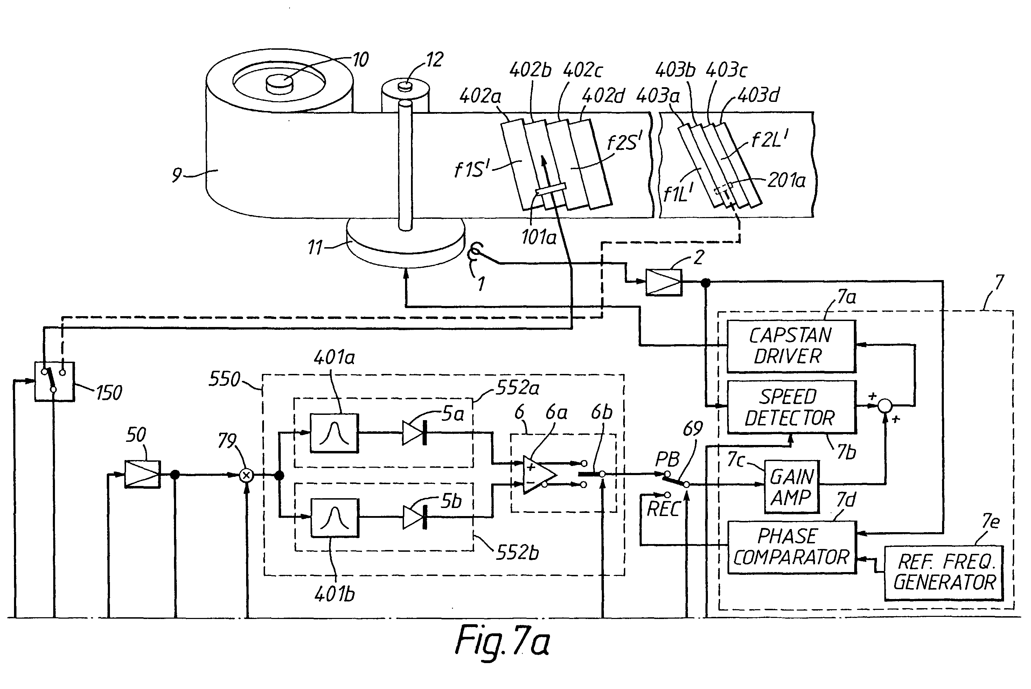

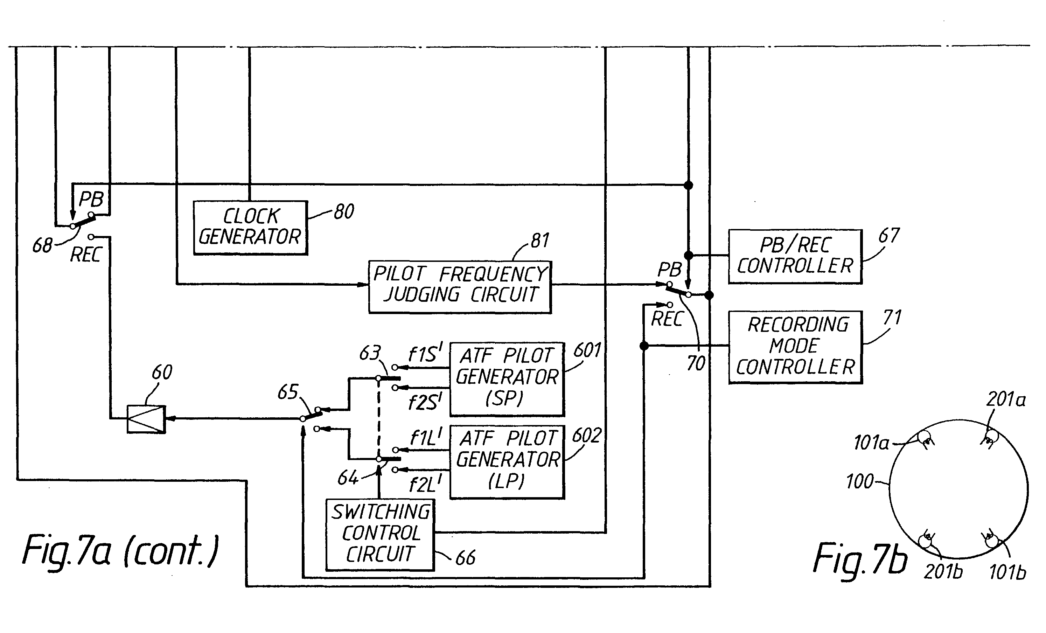

A second example magnetic recording and reproducing apparatus in which the present invention may be used is described below while referring to the accompanying drawings. Fig. 7 shows a structural diagram of a magnetic recording and reproducing apparatus of the second example of the invention. The same constituent elements functioning same as in the first example are identified with same reference numerals and their descriptions are omitted.

In the first example, the frequency of the pilot signal when recording was different in each mode, and was set higher when the track width was narrower. In the second example, an oscillator 601 issues pilot signal $f_{1S}'$, $f_{2S}'$ in SP mode, and an oscillator 602 issues pilot signals $f_{1L}'$, $f_{2L}'$ in LP mode, and the relation of the frequencies is defined as follow.

$$f_{1L}' = f_{1S}' + f_0$$

$$f_{2L}' = f_{2S}' + f_0$$

These pilot signals are recorded in a magnetic tape (402a to d, 403a to d) same as in the first example. The reproducing operation is described below.

The reproduced signal to be entered in an ATF error detector 550, that is, the output signal of a reproducing amplifier 50 is converted in frequency by a clock of frequency $f_0/2$ issued from a clock generator 80 and a multiplexer 79. While reproducing the track recorded in SP mode as in the diagram, the reproduced pilot signals $f_{1S}'$, $f_{2S}'$ are converted as follows.

$$f_{1S}' - f_{1S}' - f_0/2 \text{ and } f_{1S}' + f_0/2$$

$$f_{2S}' - f_{2S}' - f_0/2 \text{ and } f_{2S}' + f_0/2$$

On the other hand, while reproducing the track recorded in LP mode, the reproduced pilot signals $f_{1L}'$, $f_{2L}'$ are converted as follows.

$$f_{1L}' - f_{1L}' - f_0/2 \text{ and } f_{1L}' + f_0/2$$

$$f_{2L}' - f_{2L}' - f_0/2 \text{ and } f_{2L}' + f_0/2$$

Hence,

$$f_{1L}' - f_{1S}' - f_0/2 \text{ and } f_{1S}' + f_0/2$$

$$f_{2L}' - f_{2S}' - f_0/2 \text{ and } f_{2S}' + f_0/2$$

By multiplying the clock of frequency $f_0/2$ by the reproduced signal, the center frequencies of a first band pass filter 401a and second band pass filter 401b for composing a first pilot detector 552a and a second pilot detector 552b are fixed at $f_{1S}' + f_0/2'$ and $f_{2S}' + f_0/2$ regardless of mode, and can be hence shared.

As clear from the description herein, in the second example, the frequencies of the pilot signals when recording is not merely different from each other by mode, but the mutual frequency difference is the same, so that it is not necessary to change over the detection region in every mode. Therefore, the band pass filters can be shared regardless of the mode, and the large external components such as coils and capacitors for composing the filters can be saved. Although the judging method of the recording mode is same as in the first example, but it is only necessary herein to change over the tape speed and head on the basis of the result of feed judgement. The frequency of the clock generator 80 is not limited to $f_0/2$. Two frequencies different from each other by $_0f$ may be selectively used depending on whether the mode is LP mode or SP mode.

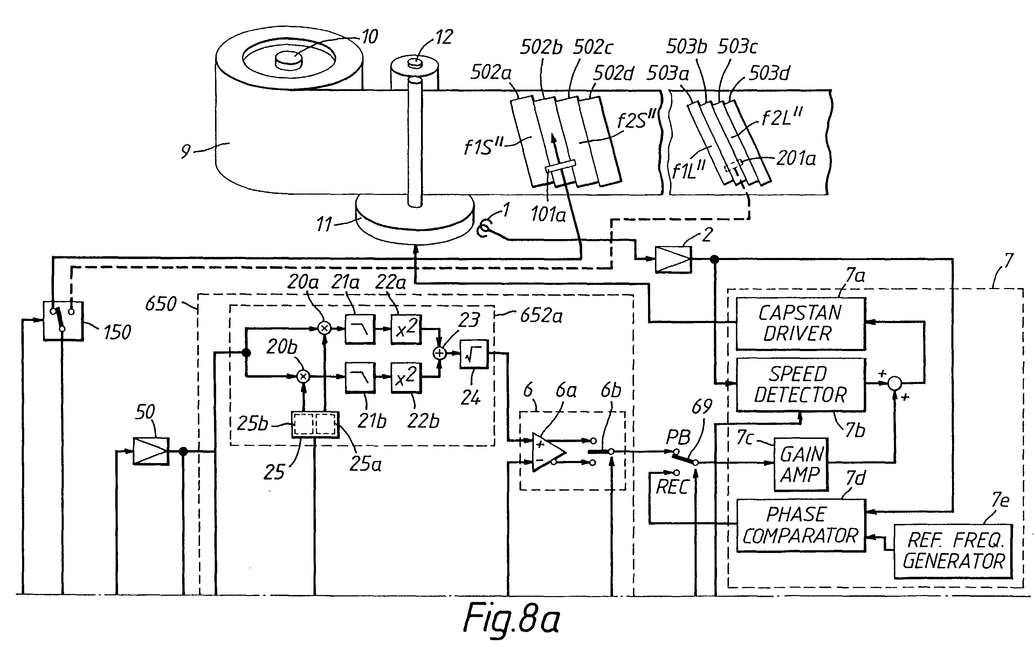

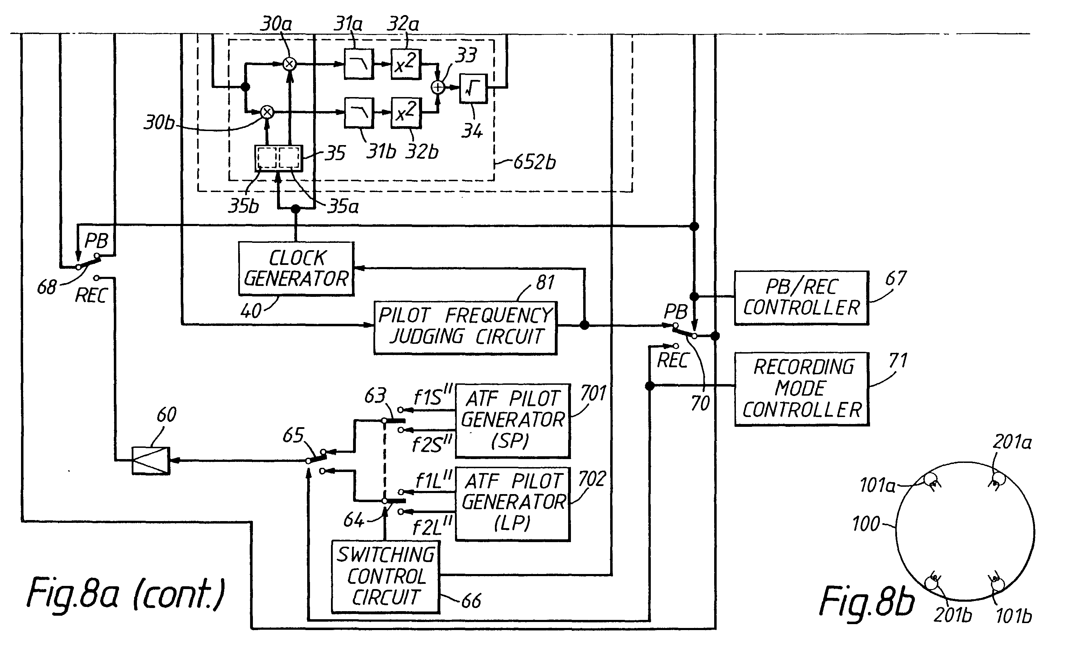

A third example of a magnetic reproducing and recording apparatus to which the present invention may be applied is described below while referring to the drawing. Fig. 8 is a diagram showing the constitution of the third example of a magnetic recording and reproducing apparatus. Same constituent elements functioning same as in the first example are identified with same reference numbers and their descriptions are omitted.

In addition to the features of the pilot frequency when recording shown in the first example, in the third example, an oscillator 701 issues pilot signals $f_{1S}"$, $f_{2S}"$ in SP mode, and an oscillator 702 issues pilot signals $F_{1L}"$, $f_{2L}"$ in LP mode, and the frequencies are characterized by the following relation.

$$f_{1L}" = A\, f_{1s}"$$

$$f_{2L}" = A\, f_{2s}"$$

These pilot signals are recorded in a magnetic tape 9 (502a to d, 503a to d) same as in the first and second embodiments. Then, as shown in Fig. 8, while the head 101a is reproducing and scanning the track 502b in SP mode, first and second pilot detectors 652a, b operate as described below in an ATF error detector 650.

A first frequency divider 25 is connected to a clock generator 40, and issues a local pilot at the same frequency ($f_{1sr}$) as the reproduced pilot signal $f_{1s}"$. Individual first and second frequency dividers 25a, 25b issue local pilots same in frequency but different in phase by 90 degrees mutually. The outputs $D_{1a}$, $D_{1b}$ of the first and second frequency dividers 25a, 25b are expressed as follows.

$$D_{1a} = \sin (2\,\pi\, f_{1sr}\, t)$$

$$D_{1b} = \cos (2\,\pi\, f_{1sr}\, t)$$

A multiplexer 20a multiplies the reproduced signal of the head 101a amplified by the reproducing amplifier 50 and the output $D_{1a}$ of the first frequency divider 25a. A second multiplexer 20b similarly multiplies the reproduced signal and the output $D_{1b}$ of the second frequency divider 25b. Supposing, of the reproduced signals, the pilot signal $f_{1s}"$ component H1 to be

$$H_1 = A_1 \sin(2\,\pi\, f_{1s}"t)$$

(where $A_1$: amplitude of pilot signal $F_{1s}"$, t: time) the output $M_1$ of the first multiplexer 20a is expressed as follows. $M_{1a} = H_1 \times d_{1a}$

$$= A_1/2 \{ \cos (2\,\pi\, f_{1s}"t - 2\,\pi\, f_{1sr}\, t)$$

$$- \cos (2\,\pi\, f_{1s}"t + 2\,\pi\, f_{1sr}\, t)\}$$

$$= A_1/2 \{ \cos(\Theta_1) - \cos(2\pi f_{1s}''t + 2\pi f_{1sr} t) \}$$

Likewise, the output $M_{1b}$ of the second multiplexer 20b is as follows. $M_{1b} = H_1 \times D_{1b}$

$$= A_1/2 \{ \sin(2\pi f_{1s}'' t - 2\pi f_{1sr} t)$$

$$+ \sin(2\pi f_{1s}'' t + 2\pi f_{1sr} t) \}$$

$$= A_1/2 \{ \sin(\Theta_1) + \sin(2\pi f_{1s}'' t + 2\pi f_{1sr} t) \}$$

where $\Theta_1$ denotes the phase difference between the reproduced pilot signal $f_{1s}$" and local pilot $f_{1sr}$. A first low pass filter 21a passes only the low frequency signals of the output $M_{1a}$ of the first multiplexer 20a. A second low pass filter 21b similarly passes only the low frequency signals of the output $M_{1b}$ of the second multiplexer 20b. Therefore, the output Lla of the first low pass filter 21a passes only the first term of $M_{1a}$, and the output $L_{1b}$ of the second low pass filter 21b passes only the first term of $M_{1b}$. That is,

$$L_{1a} = A_1/2\{\cos(\Theta_1)\}$$

$$L_{1b} = A_1/2(\sin(\Theta_1))$$

Squaring the outputs of the first and second low pass filters and mutually adding and powering by 1/2, a component of half of amplitude of pilot single $f_{1s}$" is obtained as the output $P_{D1}$ of a first pilot detector 652a.

$$P_{D1} = (L_{1a}{}^2 + L_{1b}{}^2)^{1/2}$$

$$= A_1/2$$

(where $\sin^2(\Theta_1) + \cos^2(\Theta_1) = 1$)

Consequently, a second frequency divider 35 is connected with a clock generator 40, and produces a local pilot signal at the same frequency $f_{2sr}$ as the reproduced pilot signal $f_{2s}$". The third and fourth frequency dividers 35a, 35b thereof produce local pilots same in frequency and difference in phase by 90 degrees from each other. The outputs $D_{2a}$, $D_{2b}$ of the third and fourth frequency dividers 35a, 35b are shown below.

$$D_{2a} = \sin(2\pi f_{2sr} t)$$

$$D_{2b} = \cos(2\pi f_{2sr}t)$$

Next, a third multiplexer 30a multiplies the reproduced signal of the head 101a amplified by the amplifier 50 and the output $D_{2a}$ of the third frequency divider 35a. A fourth multiplexer 30b similarly multiplies the reproduced signal and the output $D_{2b}$ of the fourth frequency divider. Supposing, of the reproduced signals, the pilot signal $f_{2s}$" component $H_2$ to be

$$H_2 = A_2\sin(2\pi f_{2s}''t)$$

(where $A_2$ : amplitude of pilot signal $f_{2s}$", t: time) the output $M_{2a}$ of the third multiplexer 30a is expressed as follows.

$$M_{2a} = H_2 \times D_{2a}$$

$$= A_2/2 \{ \cos(2\pi f_{2s}'' t - 2\pi f_{2sr} t)$$

$$- c o s (2 \pi f_{2s} ''t + 2 \pi f_{2sr} t )\}$$

$$= A_2/2 \{c o s (\Theta_2) - c o s(2 \pi f_{2s} ''t + 2 \pi f_{2sr} t)\}$$

Likewise, the output $M_{2b}$ of the fourth multiplexer 30b is as follows.

$$M_{2b} = H_2 \times D_{2b}$$

$$= A_2/2 \{s i n (2 \pi f_{2s} ''t - 2 \pi f_{2sr} t)$$

$$+ s i n (2 \pi f_{2s} ''t + 2 \pi f_{2sr} t)\}$$

$$= A_2/2 \{s i n (\Theta_2) + s i n (2 \pi f_{2s} ''t + 2 \pi f_{2sr} t)\}$$

where $\Theta_2$ denotes the phase difference between the reproduced pilot signal $f_{2s}''$ and local pilot $f_{2sr}$. A third low pass filter 31a passes only low frequency signals of the output $M_{2a}$ of the third multiplexer 30a. A fourth low pass filter 31b similarly passes only low frequency components of the output $M_{2b}$ of the fourth multiplexer 30b. The output $L_{2a}$ of the third low pass filter 31a passes only the first term of $M_{2a}$, and the output $L_{2b}$ of the fourth low pass filter 31b passes only the first term of $M_{2b}$. That is,

$$L_{2a} = A_2/2\{cos(\Theta_2)\}$$

$$L_{2b} = A_2/2\{sin(\Theta_2)\}$$

Accordingly, squaring the outputs of the third and fourth low pass filters, adding mutually and powering by 1/2, a component of 1/2 of amplitude of pilot signal $F_{2S}''$ is obtained as the output P of a second pilot detector 652b is obtained.

$$P_{D2} = (L_{2a} + L_{2b}{}^2)^{1/2}$$

$$= A_2/2$$

(where $\sin^2 (\theta_2) + \cos^2 (\theta_2) = 1$)

Explained so far is the example of reproducing the tracks recorded in SP mode, and when reproducing the tracks recorded in LP mode, the modes can be easily changed over by multiplying the frequency of the clock generator 40 by A, and the operation of the pilot detectors 652a, b is same as in SP mode. The recording mode judging method is same as in the first example, and herein, depending on the result of judgement, the tape feed speed, clock generator frequency, and head are changed over.

As clear from the description herein, in the third example, the frequencies of pilot signals in recording are not merely different from each other by modes, but the ratio of mutual frequencies is set equal, so that the detection band and setting time can be equalized regardless of the mode, thereby making the design of control system easy. For example, along with the digitization of the servo circuit, the residual deviation may be same between modes at same sampling point, and setting of sampling point in every mode is not necessary.

Furthermore, by digital processing of ATF error detector, the number of large external parts such as coils and capacitors is reduced, and adjusting points such as detection bands can be saved, so that the apparatus may be reduced in size and lowered in cost.

Moreover, the pilot frequency judging circuit for Judging the recording mode in reproducing may be further reduced in size and lowered in cost by applying the pilot detector in the third example.

In the first, second, and third examples of magnetic recording and reproducing apparatuses described above, the two frequency ATF system is described, but the invention may be also applied in the ATF systems of one frequency or more, not limited to the existing one-frequency or four-frequency pilot ATF system. Besides, instead of the judgement of two modes of SP and LP, it is possible to be applied to other plural modes.

Hereinafter, a tracking error detector according to the present invention.is described.

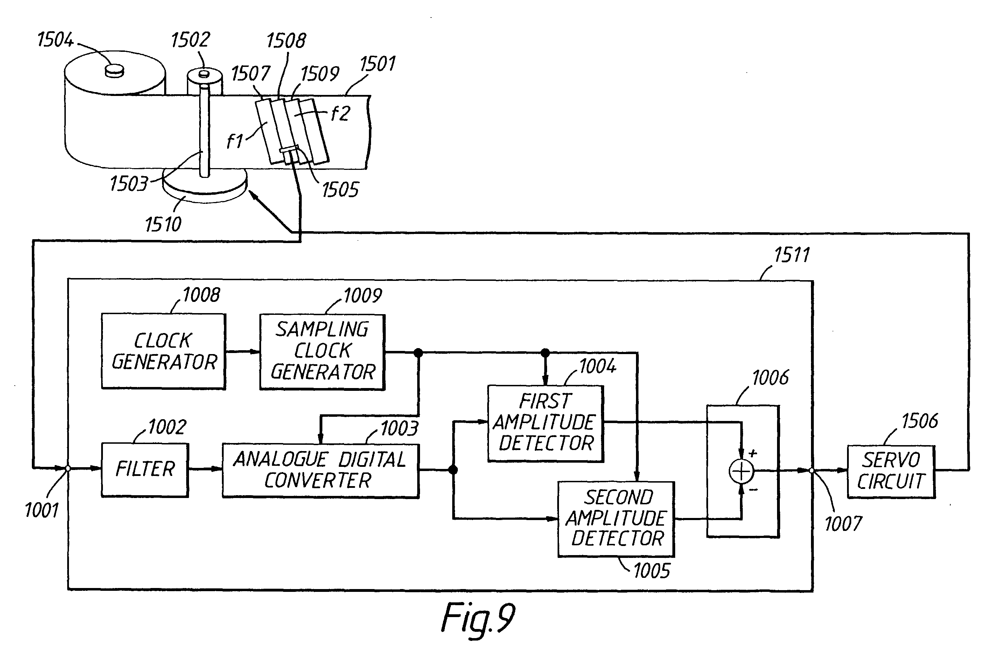

Fig. 9 is a block diagram of a first embodiment of a tracking error detector according to the present invention.

In ATF control, pilot signals of several different frequencies are sequentially and cyclically changed, and recorded by multiplexing in frequency or modulating In the information to be recorded. A pilot signal of fl is recorded in a track 1507, and a pilot signal of f2 is recorded in a track 1509. In reproducing, when a head 1505 scans a target track 1508, pilot signals fl and f2 leaking in from tracks 1507 and 1509 adjacent to the target track 1508 are reproduced as reproduced signals together with the target information signal. The difference of the amplitudes of the pilot signals fl and f2 from both adjacent tracks contained in the reproduced signals is detected by a tracking error detector 1511. The amplitude of the pilot signal varies differentially depending on the deviation of the target track and the head. That is, as the head 1505 is deviated in scanning toward the track 1507, the amplitude of the pilot signal f1 increases, or when scanning is deviated to the track 1509, the amplitude of the pilot signal f2 increases. Hence, the tracking error signal determining the difference is a signal changing in polarity depending on the tracking. Using thus obtained tracking error signal, as the servo circuit 1506 controls the capstan motor 1510, the configuration of the head 1505 and the target track 1508 can be always kept correctly.

The operation of the tracking error detector 1511 is explained below. In Fig. 9, numeral 1002 is a filter, 1003 is a sampling circuit, 1004 is a first amplitude detector, 1005 is a second amplitude detector, 1006 is a subtracting circuit, 1008 is a clock generator, and 1009 is a sampling clock generator. From a terminal 1001, a reproduced signal is entered. The reproduced signal contains pilot signals having frequencies f1 [Hz] and f2 [Hz]. The reproduced signal is deprived of a causative component of aliasing noise in sampling by the filter 1002, and sampled in the sampling circuit 1003. The sampling clock at this time is created by dividing the output of the clock generator 1008 by the sampling clock generator 1009 so that the frequency may be fs [Hz] being a common multiple of f1 and f2. As the filter 1002, meanwhile, by using a band pass filter with the passing band in the vicinity of the pilot frequency, the SNR of the A/D input signal is improved, and the detection precision is enhanced. From the output of the sampling circuit 1003, in the first amplitude detector 1004, the amplitude of the pilot signal of f1 [Hz] is detected by using the sampling clock, and in the second amplitude detector 1005, similarly, the amplitude of the pilot signal of f2 [Hz] is detected. The subtracting circuit 1006 finds the difference between the output of the first amplitude detector 1004 and the output of the second amplitude detector 1005, and issues a tracking error signal to the terminal 1007. The first amplitude detector 1004 and second amplitude detector 1005 utilize envelope detection, orthogonal two-phase signal multiple detection etc.

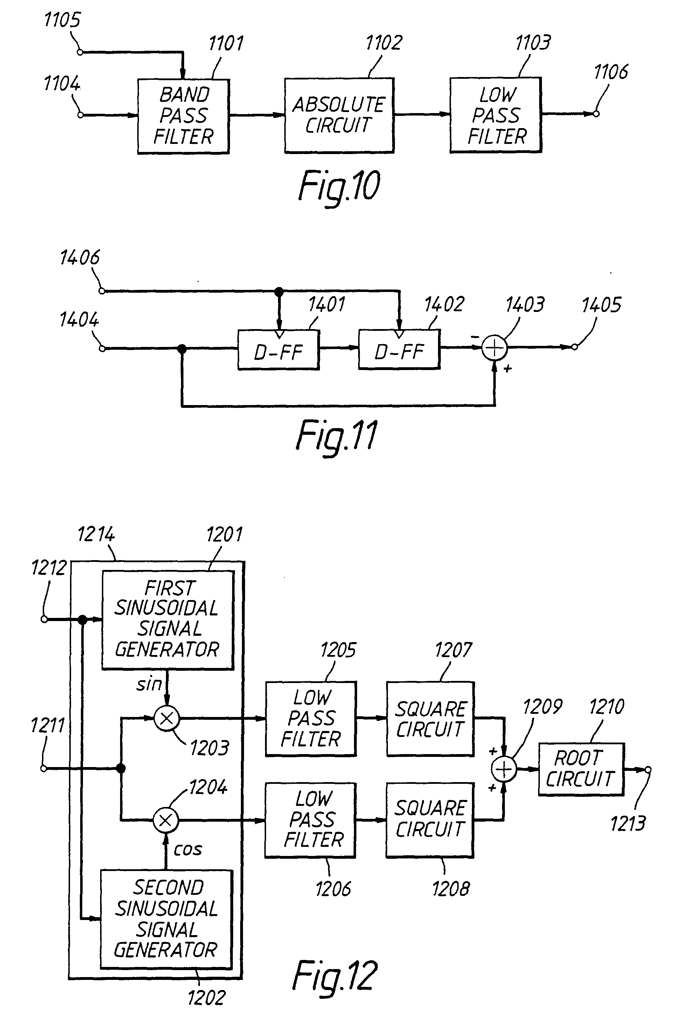

The amplitude detector by envelope detection is described below. Herein, the frequency of the signal to be detected is supposed to be fn [Hz]. However, the pilot frequency fn is same as f1 and f2 mentioned above. Fig. 10 is a block diagram of the amplitude detector by envelope detection. The signal containing the frequency fn [Hz] entered from a terminal 1104 passes only the component of fn [Hz] by a band pass filter 1101. and the amplitude is determined by an absolute circuit 1102 and a low pass filter 1103, and a signal proportional to the amplitude of a signal at frequency fn [Hz] is issued from a terminal 110B.

At this time, the operation clock of the band pass filter 1101 entered from a terminal 1105 is a sampling clock which is an output of the sampling clock generator 1009 in Fig. 9. Accordingly, the frequency is a multiple of fn, and the constitution of the band pass filter 1101 for passing fn [Hz] is simplified. For example, supposing the sampling frequency to be 4fn, the band pass FIR filter is realized by delayed flip-flops 1401, 1402, and a subtracting circuit 1403 in Fig. 11. It is realized only by feeding the sampling clock from a terminal 1404 directly into the delayed flip-flop.

Next, the amplitude detector by orthogonal two-phase signal multiple detection is described. Same as in the explanation of the envelope detection, the frequency to be detected is fn [Hz]. Fig. 12 is a block diagram of the amplitude detector by orthogonal two-phase signal multiple detection. The input signal entered from a terminal 1211 contains a pilot signal, and supposing the amplitude to be A, it can be expressed as follows.

$$A\sin(2\pi\ fnt+x)+N$$

where t is time [sec], x is phase [rad], and N is signal at frequency other than fn [Hz] out of input signal. A first sinusoidal signal generator 1201 and a second sinusoidal signal generator 1202 produce sinusoidal waves at frequency of fn [Hz] and phase difference of $\pi/2$. The outputs of the first sinusoidal signal generator 1201 and second sinusoidal signal generator 1202 can be expressed respectively as $\sin2\pi$ fnt, $\cos2\pi$ fnt. Hence the output of a multiplexer 1203 is

$$(A\sin(2\pi\ fnt+x)+N\} \times \sin2\pi\ fnt$$

$$= A/2(\cos x-\cos(4\pi\ fnt+x)\}+N\sin2\pi\ fnt$$

On the other hand, the output of a multiplexer 1204 is

**11**

$$\{A\sin(2\pi\ fnt+x)+N\} \times \cos2\pi\ fnt$$

$$- A/2(\sin x-\sin(4\pi\ fnt+x))\}+N\cos2\ \theta\ fnt$$

By passing them through low pass filters 1205 and 1206, only DC components are left over, and the output of the low pass filter 1205 becomes Acosx/2, and the output of the low pass filter 1206 is Asinx/2. By squaring the above two formulas in square circuits 1207 and 1208, their sum is determined in an adder 1209 as follows.

$$(A\ \cos x/2)^2+(A\ \sin x/2)^2$$

$$- A^2(\cos^2 x+\sin^2 x)/4$$

$$= A^2/4$$

Its positive square root is calculated in a square root circuit 1210, and the result is A/2, and a signal proportional to the amplitude A of the signal at fn [Hz] can be obtained from a terminal 1213.

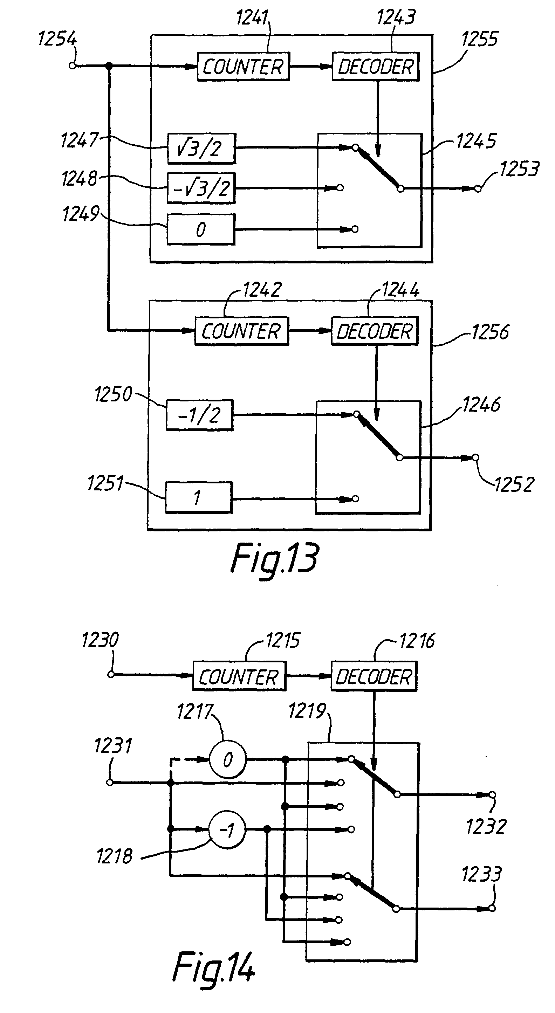

Herein, sinusoidal signal generators 1201 and 1202 produce the values sinusoidal signals at frequency fn [Hz] sampled by the sampling clock entered from a terminal 1212. This output pattern is a repetition from q=1 to fs/fn of sin ($2\pi$ fnq/fs) from the first sinusoidal signal generator 1201.and cos ($2\pi$ nfq/fs) from the second sinusoidal signal generator 1202 (where q = 1, 2, ..., fs/fn, fs: sampling frequency), and the first sinusoidal signal generator 1201 and second sinusoidal signal generator 1202 are composed of circuits for producing this repetitive patterns according to the sampling signal entered from the terminal 1212. For example, when fs = 3fn, it follows that q - 1, 2, 3, and the output pattern of the first sinusoidal signal generator is a repetition of $3^{1/2}/2$, $-3^{1/2}/2$, 0, and the output pattern of the second sinusoidal signal generator is a repetition of -1/2, -1/2, 1. Hence, as shown in Fig. 13, a first sinusoidal signal generator 1255 is composed of a circuit for selecting one of a circuit 1247 for producing $3^{1/2}/2$, a circuit 1248 for producing $3^{1/2}/2$, and a circuit 1249 for producing 0, by n selector 1245 in synchronism with the sampling signal entered from a terminal 1254, and producing from a terminal 1253, and a second sinusoidal signal generator 1256 is composed of a circuit for selecting one of a circuit 1250 for producing -1/2 and a circuit 1251 for producing 1, by a selector 1246, arid producing from a terminal 1252.

Square circuits and square root circuits may be composed of ROM and other memories.

Incidentally, when the sampling frequency fs is selected at four times of one of the pilot frequencies fn [Hz], the pattern of the output signal of the first sinusoidal signal generator 1201 ls 0, 1, 0,-1, 0, 1, 0, -1, ..., and the output pattern of the second sinusoidal signal generator 1202 is 1, 0, -1, 0, 1, 0, -1, 0, .... Accordingly, a sinusoidal signal multiplier 1214 combining the sinusoidal signal generators 1201 and 1202 and multiplexers 1203 and 1204 does not require multiplication as shown in Fig. 14, so that the constitution may be simplified. In Fig. 14, a terminal 1231 is an input terminal of signals including pilot signals. 1217 is a circuit for producing 0, 1218 is a circuit for inverting the sign, 1219 is a selector, a terminal 1230 is a sampling signal input terminal, 1215 is a counter, and 1216 is a decoder. Every time a sampling signal is entered from the terminal 1230, the selector 1219 is changed over, and from the terminal 1232, products of the input signal from the terminal 1231 sequentially multiplied by 0, 1, 0, -1, 0, 1, 0, -1, ... are produced. Similarly, from the terminal 1233, products of the input signal from the terminal 1231 sequentially multiplied by 1, 0, -1, 0, 1, 0, -1, 0, ... are produced.

Thus, by selecting the sampling clock at an integer multiple of each pilot frequency, the filter and multiplexer can be composed easily. In particular, when the sampling clock is four times the pilot frequency, multiplier is not substantially needed in the multiplexer, so that it is effective for simplifying the circuit composition.

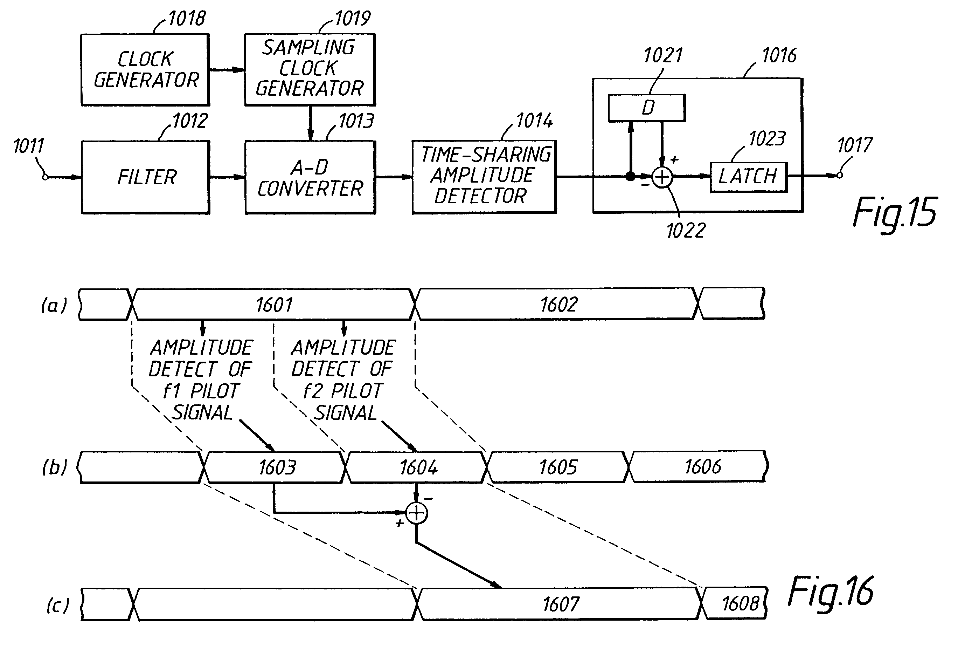

Fig. 15 is a block diagram of a second embodiment of a tracking error detector according to the present invention. In the diagram, numeral 1012 is a filter, 1013 is a sampling circuit, 1014 is a time-sharing amplitude detector, 1016 is a time-sharing subtracting circuit, 1018 is a clock generator, and 1019 is a sampling clock generator. The operation of thus composed tracking error detector is described below.

Reproduced signals are fed from the terminal 1011. The reproduced signals contain pilot signals at frequencies of f1 [Hz] and f2 [Hz]. The reproduced signals are deprived of causative components of aliasing noise in sampling by the filer 1012, and sampled in the sampling circuit 1013. The sampling clock at this time is created by dividing the output of, the clock generator 1018 to a frequency of fs [Hz] as a common multiple of f1 and f2, in the sampling clock generator 1019. From the output of the sampling circuit 1013, the amplitude of the pilot signals of f1 [Hz] and f2 [Hz] is detected by the time-sharing amplitude detector 1014 in time sharing, and a signal proportional to the amplitude of the pilot signal f1 and a signal proportional to the amplitude of the pilot signal f2 are produced alternately. In the time-sharing subtracting circuit 1016, the difference of the amplitude of the alternately detected pilot signals f1 [Hz] and f2 [Hz] is determined, and a tracking error signal is produced to the terminal 1017. The time-sharing amplitude detector 1014 employs orthogonal two-phase signal multiple detection, envelope detection, etc. The time-sharing subtracting circuit 1016 is composed of a delay 1021. a subtracting circuit 1022, and a latch 1023, and the pilot signals f1 and f2 alternately entering in time series are delayed, and the difference from the original signal is determined in the subtracting circuit 1022. As a result, (amplitude of pilot signal f1 - amplitude of pilot signal f2) and (amplitude of pilot signal f2 - amplitude of pilot signal f1) are alternately produced from the subtracting circuit 1022. Of them, by producing only a desired signal from the latch 1023, a tracking error signal is obtained. Fig. 16 is a time chart of detection process of this tracking error detector. In Fig. 16, (a) is an output of the sampling circuit 1013, (b) is an output of the time-sharing amplitude detector 1014, and (c) is an output of the time-sharing subtracting circuit 1016. The sampled signal 1601 is fed into the time'sharing amplitude detector 1014, and a signal 1603 proportional to the amplitude of pilot signal f1 and a signal 1604 proportional to the amplitude of pilot signal f2 are obtained. The difference of these signals is calculated in the time-sharing subtracting circuit 1016. Thus, a tracking error signal 1607 is obtained. In the second embodiment of the tracking error detector for the magnetic recording and reproducing apparatus, since the amplitude detector detects the amplitude of the pilot signals In time multiplex, 1t 19 composed of one time-sharing detector, and the circuit scale is smaller than In the first embodiment of the tracking error detector of the present invention.

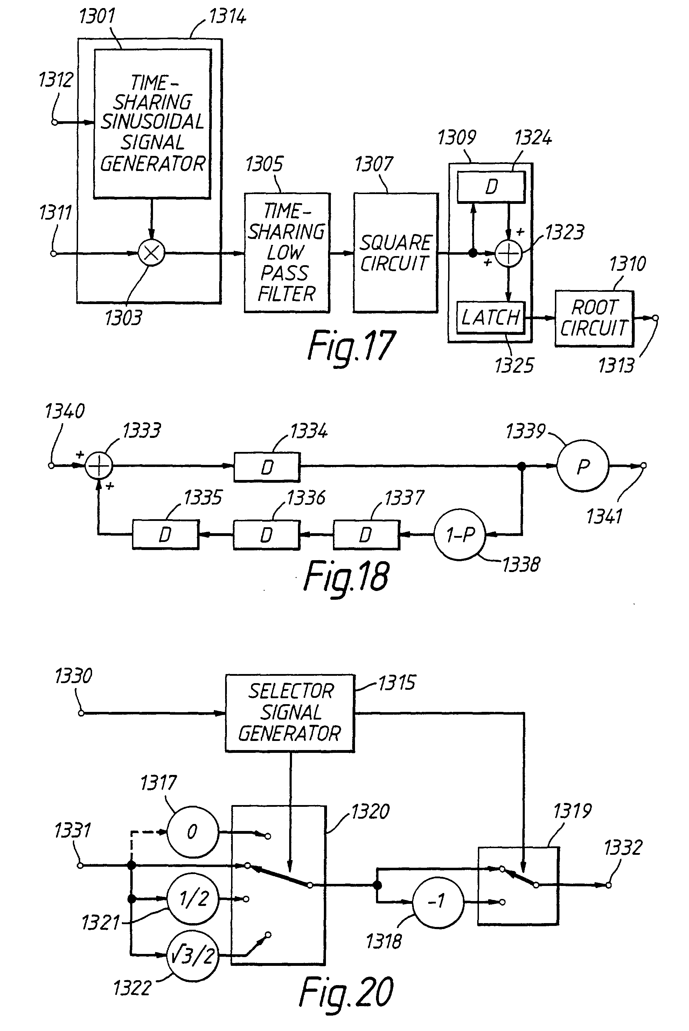

An example below shows the constitution by using two phase signal multiple detection In the time-sharing amplitude detector In the second embodiment of the tracking error detector for the magnetic recording and reproducing apparatus. Fig. 17 is a structural diagram of the time-sharing amplitude detector in the second embodiment of the tracking error detector of the present invention.

A time-sharing sinusoidal signal generator 1301 produces, from the sampling clock entered through a terminal 1312, a two-phase (phase difference $\pi/2$) signal of pilot detection signal of f1 [Hz] and a two-phase (phase difference $\pi$ /2) signal of pilot detection signal of f2 [Hz], in time multiplex by the value sampled by f2 [Hz]. The output patterns are as follows.

$$\sin(2\pi f1 \times 1 / fs)$$

$$\cos(2\pi f1 \times 1 / fs)$$

$$\sin(2\pi f2 \times 1 / fs)$$

$$\cos(2\pi f2 \times 1 / fs)$$

$$\sin(2\pi f1 \times 2 / fs)$$

$$\cos(2\pi f1 \times 2 / fs)$$

$$\sin(2\pi f2 \times 2 / fs)$$

$$\cos(2\pi f2 \times 2 / fs)$$

$$\vdots$$

$$\vdots$$

$$\sin(2\pi f1 \times q / fs)$$

$$\cos(2\pi f1 \times q / fs)$$

$$\sin(2\pi f2 \times q / fs)$$

$$\cos(2\pi f2 \times q / fs)$$

where q is the least common denominator of fs/f1 and fs/f2, and the output patterns are repetition of them. In a multiplexer 1303, the output signal of the time-sharing sinusoidal signal generator 1301 and the output signal of sampling circuit entered from a terminal 1311 are multiplied. In a time-sharing low pass filter 1305, from the output signals of two phases and two sets multiplexed in time from the multiplexer 1303, the low frequency components of the signals are detected. In a square circuit 1307, the output from the time-sharing low pass filer 1305 is squared. In a time-sharing adder 1309, the outputs from two phases and two sets of the square circuit 1307 multiplexed in time are summed in two phases and the result is produced. In a square root circuit 1310, square roots of two outputs of the time-sharing adder 1309 is determined, and the outputs of the amplitude detector, that is, the amplitudes of the pilot signals f1 and f2 are alternately issued to a terminal 1313. The time-sharing adder 1309 is composed of a delay 1324, an adder 1323, and a latch 1325, and In the same principle as the time-sharing subtracting circuits in Fig. 15 and Fig. 16, the outputs of the square circuit 1307 are added between two phases of each pilot frequency. The time-sharing low pass filter 1305 consists of, as shown in Fig. 18, delays 1334, 1335, 1336 and 1337, an adder 1333, a circuit 1338 for multiplying constant 1-p. and a circuit 1339 for multiplying constant p. Herein, by setting the delay time of the delays 1334, 1335,1336 and 1337 as one period of signal shared in time, four signals arranged in time series can be passed, only of the low frequency components, independently, thereby playing the role of the time-sharing low pass filter. The time-shaning low pass filter shown in Fig. 18 is shown herein, but in the low pass filter of other type, by dividing the delay in four divisions, same effects are brought about, and the time-sharing low pass filter may be replaced by a low pass filter of other type.

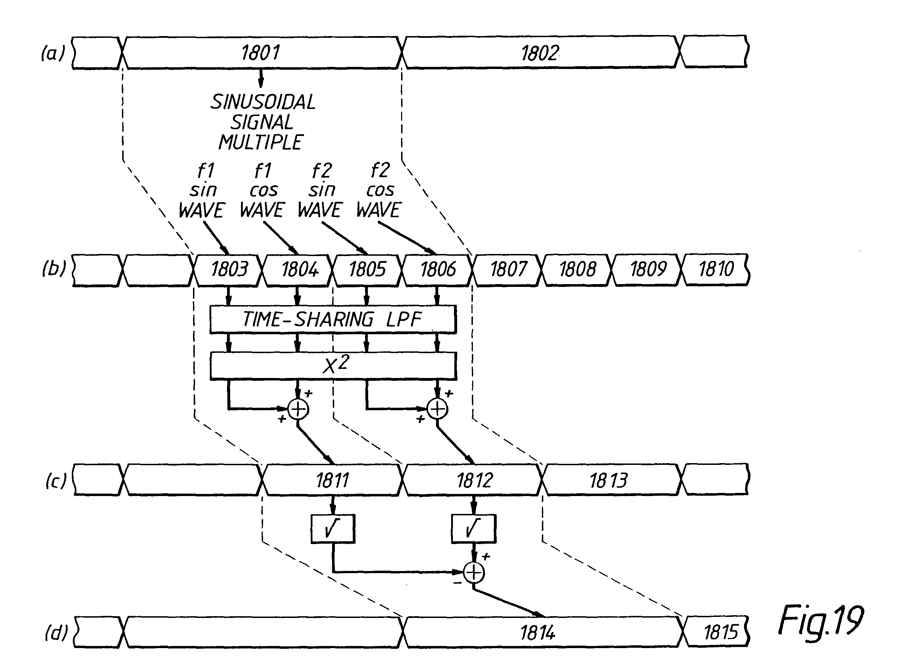

Fig. 19 is a time chart of detection process of this amplitude detector. In Fig. 19, (a) is an input of amplitude detector, (b) is an output of time-sharing sinusoidal signal multiplier, (c) is an output of time-sharing adder, and (d) is an output of time-sharing subtracting circuit. The sampled signal 1801 is fed into the time-sharing sinusoidal signal multiplier 1314, from which a signal 1803 multiplied by f1sin signal, a signal 1804 multiplied by flcos signal, a signal 1805 multiplied by f2sin signal, and a signal 1806 multiplied by f2cos signal are obtained. By the repetition in the same process as in Fig. 16, addition between two phases, square root calculation and subtraction between amplitudes of pilot signals f1 and f2 are performed, and a tracking error signal 1814 is obtained.

The square circuit and square root circuit may be composed of ROM and other memories, same as in the first embodiment of the tracking error detector.

Incidentally, when two pilot frequencies f1, f2 are in the relation of f2 = 1.5 x f1, the time-sharing sinusoidal signal multiplier 1314 in Fig. 17 is realized in the constitution as shown in Fig.. 20. That is, supposing the sampling frequency to be fs = 6 x f1 = 4 x f2, the values to be multiplied in the time-sharing sinusoidal signal multiplier 1314 are as follows:

$$\sin(2\pi f1 \times 1 / fs) = 3^{1/2}/2$$

$$\cos(2\pi f1 \times 1 / fs) = 1/2$$

$$\sin(2\pi f2 \times 1 / fs) = 1$$

$$\cos(2\pi f2 \times 1 / fs) = 0$$

$$\sin(2\pi f1 \times 2 / fs) = 3^{1/2}/2$$

$$\cos(2\pi f1 \times 2 / fs) = -1/2$$

$$\sin(2\pi f2 \times 2 / fs) = 0$$

$$\cos(2\pi f2 \times 2 / fs) = -1$$

$$\sin(2\pi f1 \times 3 / fs) = 0$$

$$\cos(2\pi f1 \times 3 / fs) = -1$$

$$\sin(2\pi f2 \times 3 / fs) = -1$$

$$\cos(2\pi f2 \times 3 / fs) = 0$$

$$\vdots$$

$$\vdots$$

$$\sin(2\pi f1 \times 24 / fs) = 0$$

$$\cos(2\pi f1 \times 24 / fs) = 1$$

$$\sin(2\pi f2 \times 24 / fs) = 0$$

$$\cos(2\pi f2 \times 24 / fs) = 1$$

which means to be any one of 0, 1, 1/2, $3^{1/2}/2$. -1, -1/2, $-3^{1/2}/2$. Hence, any value of products of the input value from the terminal 1331 multiplied by 0, 1, 1/2, $3^{1/2}/2$ by the multiplexers 1321, 1322 or the circuit 1317 for producing 0 is selected by the selector 1320, and by selecting either this output or the product of this output multiplied by -1 by the selector 1319, a desired multiplied value is obtained. In this embodiment of amplitude detector, by detecting signals of two sets and two phases in amplitude detection of each pilot signal in time multiplex, it is possible to composed by time-sharing amplitude detector for one phase, so that it is effective for reducing the circuit scale.

Herein is explained a case in which the amplitude detector is envelope detection of two-frequency pilot or orthogonal two-phase signal multiple detection, but the invention is similarly applicable, as it is evident, in pilot signal detection using four-frequency pilot signals or one-frequency pilot signal such as 8 mm video cassette recorder and digital audio taperecorder.

**Claims**

1. A tracking error detector (1511) used in a magnetic recording and reproducing apparatus for reproducing tracks formed obliquely to a longitudinal direction of a magnetic tape (1501) in which pilot signals have been recorded in multiplex with an information signal by a rotary head (1505), and forming a tracking error signal for correcting deviation of a scanning track of the rotary head relative to a target track (1508) to be scanned by the rotary head by a level difference of pilot signals reproduced from both adjacent tracks (1507, 1509) adjacent to the target track, said tracking error detector comprising:

Sampling means (1003, 1009, 1013, 1019) for analog-digital converting a reproduced signal at a predetermined sampling frequency;

amplitude detecting means (1004, 1005, 1014) for detecting an amplitude of a first pilot signal from one of adjacent tracks from an output signal of the sampling means and an amplitude of a second pilot signal from the other of the adjacent tracks; and

subtracting means (1006) for determining a difference between the amplitudes of the first and second pilot signals and for issuing the tracking error signal,

characterized in that the predetermined sampling frequency of the sampling means is substantially equal to a common multiple of each pilot frequency leaking in from the both adjacent tracks.

2. A tracking error detector of claim 1, wherein the sampling frequency of the sampling means is four times or nearly four times the frequency of either the first pilot signal or the second pilot signal.

3. A tracking error detector of claim 1, wherein the amplitude detecting means comprises a time-sharing amplitude detecting means (1014) for detecting, from an output signal of said sampling means, the amplitude of the first pilot signal and the amplitude of the second pilot signal alternately in a time-sharing manner.

4. A tracking error detector of claim 3, wherein the time sharing detecting means (1014) comprises:

a time-sharing sinusoidal signal generating means (1301) for generating sequentially in a time-sharing manner a first sinusoidal signal having a frequency substantially equal to a pilot frequency of the first pilot signal, a second sinusoidal signal having a frequency substantially equal to the frequency of the first sinusoidal signal and a phase difference of $\pi/2$ from the first sinusoidal signal, a third sinusoidal signal having a frequency substantially equal to a pilot frequency of the second pilot signal, and a fourth sinusoidal signal having a frequency substantially equal to the frequency of the third sinusoidal signal and a phase difference of $\pi/2$ from the third sinusoidal signal;

a time-sharing multiplying means (1303) for sequentially multiplying the first sinusoidal signal, the second sinusoidal signal, the third sinusoidal signal, and the fourth sinusoidal signal by the output signal of the sampling means to obtain a first multiplied signal, a second multiplied signal, a third multiplied signal, and a fourth multiplied signal, respectively;

a time-sharing low pass filter (1305) for sequentially passing low frequency components of the first multiplied signal, the second multiplied signal, the third multiplied signal, and the fourth multiplied signal to obtain a first low frequency component signal, a second low frequency component signal, a third low frequency component signal, and a fourth low frequency component signal, respectively;

a time-sharing squaring circuit (1307) for sequentially squaring the first low frequency component signal, the second low frequency component signal, the third low frequency component signal, and the fourth low frequency component signal to obtain a first square signal, a second square signal, a third square signal, and a fourth square signal, respectively;

a time-sharing adding means (1309) for adding the first square signal to the second square signal to obtain a first sum signal and adding the third square signal to the fourth square signal to obtain a second sum signal so that the first and second sum signals occur alternately in a time sharing manner; and

a square root circuit (1310) for sequentially calculating a square root of the first sum signal and a square root of the second sum signal to obtain the amplitude of the first pilot signal and the amplitude of the second pilot signal, respectively.

**Patentansprüche**

1. Ein Spurungsfehlerdetektor (1511), der in einem magnetischen Aufzeichnungs- und Wiedergabegerät zum Wiedergeben von Spuren, die schräg zu einer Längsrichtung eines magnetischen Bands (1501) gebildet sind, verwendet ist, wobei Pilotsignale im Multiplexverfahren mit einem Informationssignal durch einen Drehkopf (1505) aufgezeichnet worden sind, und Bilden eines Spurungsfehlersignals zum Korrigieren einer Abweichung einer Abtastspur des Drehkopfs relativ zu einer Zielspur (1508), die durch den Drehkopf abgetastet werden soll, durch eine Pegeldifferenz von Pilotsignalen, wiedergegeben von beiden angrenzenden Spuren (1507, 1509) angrenzend an die Zielspur, wobei der Spurungsfehlerdetektor aufweist:

eine Abtasteinrichtung (1003, 1009, 1013, 1019) zum Analog-Digital-Wandeln eines wiedergegebenen Signals unter einer vorbestimmten Abtastfrequenz;

eine Amplitudenerfassungseinrichtung (1004, 1005, 1014) zum Erfassen einer Amplitude eines ersten Pilotsignals von einer der angrenzenden Spuren von einem Ausgangssignal der Abtasteinrichtung und einer Amplitude eines zweiten Pilotsignals von der anderen der angrenzenden Spuren; und

eine Subtrahiereinrichtung (1006) zum Bestimmen einer Differenz zwischen den Amplituden des ersten und des zweiten Pilotsignals und zum Ausgeben des Spurungsfehlersignals,

dadurch gekennzeichnet, daß die vorbestimmte Abtastfrequenz der Abtasteinrichtung im wesentlichen gleich zu einem gemeinsamen Vielfachen jeder Pilotfrequenz ist, die leckagemäßig von den beiden angrenzenden Spuren eintritt.

2. Spurungsfehlerdetektor nach Anspruch 1, wobei die Abtastfrequenz der Abtasteinrichtung viermal oder nahezu viermal der Frequenz entweder des ersten Pilotsignals oder des zweiten Pilotsignals entspricht.

3. Spurungsfehlerdetektor nach Anspruch 1, wobei die Amplitudenerfassungseinrichtung eine Timesharing-Amplitudenerfassungseinrichtung (1014) zum Erfassen, von einem Ausgangssignal der Abtasteinrichtung, der Amplitude des ersten Pilotsignals und der Amplitude des zweiten Pilotsignals alternierend in einer Timesharing-Weise aufweist.

4. Spurungsfehlerdetektor nach Anspruch 3, wobei die Timesharing-Erfassungseinrichtung (1014) aufweist:

eine Timesharing-Sinussignal-Erzeugungseinrichtung (1301) zum Erzeugen sequentiell in einer Timesharing-Weise eines ersten Sinussignals, das eine Frequenz im wesentlichen gleich zu einer Pilotfrequenz des ersten Pilotsignals hat, eines zweiten Sinussignals, das eine Frequenz im wesentlichen gleich zu der Frequenz des ersten Sinussignals und eine Phasendifferenz von $\pi/2$ zu dem ersten Sinussignal besitzt, eines dritten Sinussignals, das eine Frequenz im wesentlichen gleich zu einer Pilotfrequenz des zweiten Pilotsignals hat, und eines vierten Sinussignals, das eine Frequenz im wesentlichen gleich zu der Frequenz des dritten Sinussignals und eine Phasendifferenz von $\pi/2$ zu dem dritten Sinussignal hat;

eine Timesharing-Multiplying-Einrichtung (1303) zum sequentiellen Vervielfachen des ersten Sinussignals, des zweiten Sinussignals, des dritten Sinussignals und des vierten Sinussignals durch das Ausgangssignal der Abtasteinrichtung, um ein erstes, vervielfachtes Signal, ein zweites, vervielfachtes Signal, ein drittes, vervielfachtes Signal und ein viertes, vervielfachtes Signal jeweils zu erhalten;

einen Timesharing-Tiefpaßfilter (1305) zum sequentiellen Hindurchführen von Niederfrequenzkomponenten des ersten, vervielfachten Signals, des zweiten, vervielfachten Signals, des dritten, vervielfachten Signals und des vierten, vervielfachten Signal, um ein erstes Niederfrequenz-Komponenten-Signal, ein zweites Niederfrequenz-Komponenten-Signal, ein drittes Niederfrequenz-Komponenten-Signal und ein viertes Niederfrequenz-Komponenten-Signal jeweils zu erhalten;

einen Timesharing-Quadrierschaltkreis (1307) zum sequentiellen Quadrieren des ersten Niederfrequenz-Komponenten-Signals, des zweiten Niederfrequenz-Komponenten-Signals, des dritten Niederfrequenz-Komponenten-Signals und des vierten Niederfrequenz-Komponenten-Signals, um ein erstes, quadratisches Signal, ein zweites, quadratisches Signal, ein drittes, quadratisches Signal und ein viertes, quadratisches Signal jeweils zu erhalten;

eine Timesharing-Addiereinrichtung (1309) zum Addieren des ersten, quadratischen Signals zu dem zweiten, quadratischen Signal, um ein erstes Summensignal zu erhalten, und zum Addieren des dritten, quadratischen Signals zu dem vierten, quadratischen Signal, um ein zweites Summensignal zu erhalten, so daß das erste und das zweite Summensignal alternierend in einer Timesharing-Weise auftreten; und einen Quadratwurzel-Schaltkreis (1310) zum sequentiellen Berechnen einer Quadratwurzel des ersten Summensignals und einer Quadratwurzel des zweiten Summensignals, um die Amplitude des ersten Pilotsignals und die Amplitude des zweiten Pilotsignals jeweils zu erhalten.

# EP 0 677 841 B1

**Revendications**

1. Détecteur d'erreur de suivi (1511) utilisé dans un dispositif d'enregistrement et de reproduction magnétique pour reproduire des pistes formées obliquement par rapport à une direction longitudinale d'une bande magnétique (1501), dans laquelle des signaux pilotes ont été enregistrés en multiplex avec un signal d'information par une tête rotative (1505) et former un signal d'erreur de suivi pour corriger l'écart d'une piste de balayage de la tête rotative par rapport à une piste de consigne (1508) devant être balayée par la tête rotative, au moyen d'une différence de niveau de signaux pilotes reproduits à partir des deux pistes adjacentes (1507, 1509), qui sont adjacentes à la piste de consigne, ledit détecteur d'erreur de suivi comprenant :

   des moyens d'échantillonnage (1003, 1009, 1013, 1019) pour réaliser la conversion analogique/numérique d'un signal reproduit, à une fréquence d'échantillonnage prédéterminée;
   des moyens de détection d'amplitude (1004, 1005, 1014) pour détecter une amplitude d'un premier signal pilote provenant de l'une de pistes adjacentes, à partir d'un signal de sortie des moyens d'échantillonnage, et une amplitude du second signal pilote provenant de l'autre des pistes adjacentes;
   des moyens soustracteurs (1006) pour déterminer une différence entre les amplitudes des premier et second signaux pilotes et pour délivrer le signal d'erreur de suivi,

   caractérisé en ce que la fréquence d'échantillonnage prédéterminée des moyens d'échantillonnage est essentiellement égale à un multiple commun de chaque fréquence pilote qui fuit à partir des deux pistes adjacentes.

2. Détecteur d'erreur de suivi selon la revendication 1, dans lequel la fréquence d'échantillonnage des moyens d'échantillonnage est égale au quadruple ou presque au quadruple de la fréquence du premier signal pilote ou du second signal pilote.

3. Détecteur d'erreur de suivi selon la revendication 1, dans lequel les moyens de détection d'amplitude comprennent des moyens de détection d'amplitude travaillant en temps partagé (1014) pour détecter, dans un signal de sortie desdits moyens d'échantillonnage, l'amplitude du premier signal pilote et l'amplitude du second signal pilote, alternativement d'une manière partagée dans le temps.

4. Détecteur d'erreur de suivi selon la revendication 3, dans lequel les moyens de détection travaillant en temps partagé (1014) comprennent :

   des moyens (1301) de production de signaux sinusoïdaux travaillant en temps partagé pour produire séquentiellement, d'une manière partagée dans le temps, un premier signal sinusoïdal possédant une fréquence sensiblement égale à une fréquence pilote du premier signal pilote, un second signal sinusoïdal possédant une fréquence sensiblement égale à la fréquence du premier signal sinusoïdal, et une différence de phase $\pi/2$ à partir du premier signal sinusoïdal, un troisième signal sinusoïdal possédant une fréquence sensiblement égale à une fréquence pilote du second signal pilote, et un quatrième signal sinusoïdal possédant une fréquence sensiblement égale à la fréquence du troisième signal sinusoïdal et une différence de phase de $\pi/2$ par rapport au troisième signal sinusoïdal;
   des moyens multiplicateurs travaillant en temps partagé (1303) pour multiplier séquentiellement le premier signal sinusoïdal, le second signal sinusoïdal, le troisième signal sinusoïdal et le quatrième signal sinusoïdal par le signal de sortie des moyens d'échantillonnage pour obtenir respectivement un premier signal multiplié, un second signal multiplié, un troisième signal multiplié et un quatrième signal multiplié;
   un filtre passe-bas travaillant en temps partagé (1305) pour transmettre séquentiellement des composantes à basse fréquence du premier signal multiplié, du second signal multiplié, du troisième signal multiplié et du quatrième signal multiplié pour obtenir respectivement un premier signal de composante à basse fréquence, un second signal de composante à basse fréquence, un troisième signal de composante à basse fréquence et un quatrième signal de composante à basse fréquence;
   un circuit d'élévation au carré travaillant en temps partagé (1307) pour séquentiellement élever au carré le premier signal de composante à basse fréquence, le second signal de composante à basse fréquence, le troisième signal de composante à basse fréquence et le quatrième signal de composante à basse fréquence pour obtenir respectivement un premier signal carré, un second signal carré, un troisième signal carré et un quatrième signal carré;
   des moyens additionneurs travaillant en temps partagé (1309) pour ajouter le premier signal carré au second signal carré pour obtenir un premier signal somme et ajouter le troisième signal carré au quatrième signal carré pour obtenir un second signal somme de sorte que les premier et second signaux sommes apparaissent alternativement d'une manière partagée dans le temps; et

un circuit de formation de racine carrée (1310) pour calculer séquentiellement une racine carrée du premier signal somme et une racine carrée du second signal somme pour obtenir respectivement l'amplitude du premier signal pilote et l'amplitude du second signal pilote.

Fig.1a

Fig.1a (cont.)

Fig.1b

EP 0 677 841 B1

*801a* *802a*

*803*

*804*

LEVEL
COMPARATOR

REPRODUCED
SIGNAL

*801b* *802b*

*805*

DETECTED
MODE SIGNAL

Fig. 2

*f15*  *Tpw*  *f25*

*101a*

*203*

*202*

*102a*  *102c*

*102b*

0  → x

Fig.3

REPRODUCED PILOT LEVEL

*220*

*221*

0  *Tpw*  x

TRACK OFFSET OF THE HEAD 101a

Fig.4

Fig.5

Fig.6

REPRODUCED PILOT LEVEL

TRACK OFFSET OF THE HEAD 201a

Fig.7a

EP 0 677 841 B1

EP 0 677 841 B1

PB
68 ⌐ REC

CLOCK GENERATOR ─80

PILOT FREQUENCY JUDGING CIRCUIT ─81

PB/REC CONTROLLER 67

PB
70 ⌐ REC

RECORDING MODE CONTROLLER 71

60

65

63  f1S'  ATF PILOT GENERATOR (SP) 601
    f2S'

64  f1L'  ATF PILOT GENERATOR (LP) 602
    f2L'

SWITCHING CONTROL CIRCUIT 66

*Fig.7a (cont.)*

*Fig.7b*

201a
101a
100
201b  101b

Fig.8a

EP 0 677 841 B1

Fig.8a (cont.)

Fig.8b

Fig.9

EP 0 677 841 B1

1105

1104

1101
BAND
PASS
FILTER

1102
ABSOLUTE
CIRCUIT

1103
LOW
PASS
FILTER

1106

Fig.10

1406

1404

1401
D-FF

1402
D-FF

1403

1405

Fig.11

1214
1212

1201
FIRST
SINUSOIDAL
SIGNAL
GENERATOR

sin

1211

1203

1205
LOW
PASS
FILTER

1207
SQUARE
CIRCUIT

1209  1210
ROOT
CIRCUIT

1213

1204

cos

1206
LOW
PASS
FILTER

1208
SQUARE
CIRCUIT

SECOND
SINUSOIDAL
SIGNAL
GENERATOR

1202

Fig.12

29

Fig.13

Fig.14

30

EP 0 677 841 B1

Fig.15

Fig.16

Fig.17

Fig.18

Fig.20

Fig.19

EP 0 677 841 B1